# EUROPÄISCHE PATENTSCHRIFT

(11) **EP 4 140 267 B1**
(45) Veröffentlichungstag und Bekanntmachung des Hinweises auf die Patenterteilung: **10.04.2024**
(21) Anmeldenummer: 22186382.2
(22) Anmeldetag: 22.07.2022
(51) Int. Cl.: A01B 29/04

(54) **BODENWALZE FÜR EINE LANDWIRTSCHAFTLICHE BODENBEARBEITUNGSMASCHINE**
SOIL ROLLER FOR AGRICULTURAL SOIL WORKING MACHINE
ROULEAU DE SOL POUR UNE MACHINE DE TRAVAIL DU SOL AGRICOLE

(30) Priorität: 25.08.2021 DE 102021121963
(43) Veröffentlichungstag der Anmeldung: 01.03.2023
(73) Patentinhaber: Pöttinger Landtechnik GmbH, 4710 Grieskirchen (AT)
(72) Erfinder: BERGER, Thomas, 4710 Grieskirchen (AT); LOHER, Felix, 4710 Grieskirchen (AT)
(74) Vertreter: Thoma, Michael

(56) Entgegenhaltungen:
- EP-A1- 1 763 979
- EP-A1- 3 858 124
- DE-A1- 19 538 585

## Beschreibung

Die vorliegende Erfindung betrifft allgemein landwirtschaftliche Bodenbearbeitungsgeräte mit einer Bodenwalze. Die Erfindung betrifft dabei insbesondere eine Bodenwalze mit einem Tragrohr, auf dem mehrere auf Felgen angeordnete Reifen beabstandet zueinander angeordnet sind, wobei an dem Tragrohr für die Reifen Achsflansche vorgesehen sind, an denen die Felgen befestigt sind.

Bei Bodenbearbeitungsmaschinen wie beispielsweise Sämaschinen werden vor oder hinter den Bodenbearbeitungswerkzeugen Packerwalzen verbaut, die quer zur Fahrtrichtung nebeneinander aufgereiht eine Vielzahl an Packerrädern umfasst, welche einzeln oder gruppenweise aufgehängt sein können. Die genannten Packerräder umfassen dabei regelmäßig Reifen, die auf Felgen montiert sind und aus Gummi beispielsweise in Form von Luftdruckreifen, oder ggf. auch als Vollgummireifen ausgebildet sein können. Die Felgen umfassen dabei eine zentrale Ausnehmung, mittels derer die Felgen an den Achsflanschen des Achsträgers befestigt werden können.

Werden dabei mehr als zwei Packerräder auf einem gemeinsamen Trag- bzw. Achsrohr gelagert, müssen die mittleren Packerräder über die äußersten Achsflansche der äußersten Räder hinweggeschoben werden, um an den mittleren Achsflaschen montiert werden zu können. Um eine Individualfertigung mit abgestuften Innendurchmessern der Felgen und abgestuften Achsflanschdurchmessern zu vermeiden, werden die Achsflansche und die Felgenausnehmungen meist in spezieller Weise konturiert, sodass die Felgen in einer bestimmten Drehstellung über die Achsflansche hinweggeschoben und in einer anderen Drehstellung daran befestigt werden können. Beispielsweise zeigt die Schrift DE 195 38 585 A1 Achsflansche mit einer blütenähnlichen Umfangskonturierung, die über den Umfang verteilt mehrere Ohren aufweisen. Die Innenausnehmungen der Felgen sind in entsprechender bzw. dazu komplementärer Weise mit Einbuchtungen versehen, die über den Innenumfang verteilt angeordnet sind. Wird das Packerrad in passender Drehstellung aufgefädelt, sodass die Ohren der Achsflansche mit den Einbuchtungen der Felgeninnenausnehmungen fluchten, kann die Felge über die am Tragrohr vorgesehenen äußeren Achsflansche hinweggeschoben werden, bis der für das jeweilige Rad bestimmte innere Achsflansch erreicht ist. Um die Felge auf dem bestimmungsgemäßen Achsflansch befestigen zu können, wird das Rad bzw. die Felge ein Stück weit verdreht, sodass die Ohren des Achsflansches mit den nicht eingebuchteten, vom Durchmesser her kleineren Bereichen der Innenausnehmung der Felge fluchten, sodass die Ohren der Achsflansche mit den nach innen vorspringenden Ausbuchtungen der Felge verschraubt werden können.

Hierdurch können mit gleichen Abmessungen und Konturierungen gefertigte Felgen wahlweise an den inneren und äußeren Achsflanschen befestigt werden. Allerdings sind solche Achsflansche mit Ohren und insbesondere die dazu korrespondierenden Felgen mit Ausnehmungen in der Innenumfangskontur, die bisweilen als "Sternfelgen" bezeichnet werden, aufwendig zu fertigen. Zudem ist die Montage diffizil, da die Sternfelgen beim Auffädeln nicht nur zentrisch, sondern auch in einer bestimmten Drehwinkelstellung positioniert werden müssen.

Hiervon ausgehend liegt der vorliegenden Erfindung die Aufgabe zugrunde, eine verbesserte Bodenwalze sowie eine verbesserte Bodenbearbeitungsmaschine der genannten Art zu schaffen, die Nachteile des Standes der Technik vermeiden und letzteren in vorteilhafter Weise weiterbilden. Insbesondere soll eine einfach zu fertigende Felge wahlweise an verschiedenen Positionen der Bodenwalze in einfacher Weise montierbar sein.

Erfindungsgemäß wird die genannte Aufgabe durch eine Bodenwalze gemäß Anspruch 1 sowie eine Bodenbearbeitungsmaschine gemäß Anspruch 11 gelöst. Bevorzugte Ausgestaltungen der Erfindung sind Gegenstand der abhängigen Ansprüche.

Es wird also vorgeschlagen, die Felgen zur Befestigung am Achsflansch nicht mehr axial gegen den genannten Achsflansch zu setzen, um die Felge axial gegen den Achsflansch spannen zu können, sondern stattdessen von den Achsflanschen und den Felgen separate Montageplatten zu verwenden, die einerseits an der Felge und andererseits an dem Achsflansch des Tragrohrs lösbar befestigt werden können, um die Felge am Achsflansch zu halten. Erfindungsgemäß sind die Achsflansche und die Felgen auch im montierten Zustand der Felgen überdeckungsfrei voneinander, wobei die Felgen mittels ringsegmentartigen Montageplatten an den Achsflanschen befestigt sind. Die genannten Montageplatten überdecken dabei - bei Betrachtung in einer Blickrichtung parallel zur Tragrohrlängsachse - sowohl die Achsflansche als auch die Felgen und sind von zumindest einer Seite her gegen jeweils einen Achsflansch und die zugehörige Felge gespannt.

Da durch die separaten Montageplatten auch im montierten Zustand keine Überdeckung zwischen Felgen und Achsflanschen notwendig ist, können die Felgen auch ohne Spezialformen der Achsflansche und der Innenausnehmungen der Felgen mit Ohren, Einbuchtungen und dergleichen über die Achsflansche hinweggeschoben und hierdurch auf das Tragrohr an die gewünschte Position aufgefädelt werden. Die Innenausnehmung der Felgen sind lediglich ausreichend groß zu bemessen, um über die Achsflansche hinweggeschoben werden zu können, wobei die Innenausnehmungen der Felgen beispielsweise im Vergleich zum Außendurchmesser der Achsflansche ein bestimmtes Übermaß aufweisen können, um ein leichtes Auffädeln zu ermöglichen, beispielsweise im Sinne einer Spielpassung. Auch wenn ein größerer Ringspalt zwischen Felge und Achsflansch, auch im montierten Zustand, verbleibt, überspannt die zumindest eine Montageplatte diesen Spalt und hält die Felge über den Spalt hinweg fest an dem zugehörigen Achsflansch. Grundsätzlich ist ein solcher Spalt bzw. Ringspalt zwischen Felge und Achsflansch aber nicht zwingend notwendig. Die Felge könnte auch zumindest einigermaßen passgenau mit ihrem Innendurchmesser auf den Außendurchmesser des Achsflansches gesetzt sein und dann von der zumindest einen überbrückenden Montageplatte fixiert sein. Eine Bemessung des Felgeninnendurchmessers mit Übermaß und einem damit einhergehenden Ringspalt zwischen Felge und Achsflansch erleichtert jedoch das Auffädeln der Packerräder auf das Tragrohr über die Achsflansche hinweg.

Vorteilhafterweise kann die Felge an ihrer Innenausnehmung und/oder Achsflansch an seinem Außenumfang derart konturiert und bemessen sein, dass die Felge in beliebiger Drehstellung über den Achsflansch hinweg geschoben werden kann. Hierdurch wird das Auffädeln der Felgen auf das Tragrohr über einen oder mehrere Achsflansche hinweg deutlich vereinfacht, da anders als bei Sternfelgen nicht mehr auf eine bestimmte rotatorische Orientierung des Packerrads geachtet werden muss.

Die Auffädelbarkeit in beliebiger rotatorischer Ausrichtung des Packerrads kann grundsätzlich durch eine im Vergleich zum Achsflansch ausreichend große Bemessung der Innenausnehmung des Packerrads bzw. dessen Felge erreicht werden, wobei bei einem ausreichenden Übermaß ggf. auch nicht kreisrunde Innenkonturierungen der Felge vorgesehen sein könnten, beispielsweise im Sinne einer leichten Bördelung oder einer Polygonzug-ähnlichen Innenkonturierung oder auch einer leichten Sternform, die bei ausreichendem Übermaß in beliebiger rotatorischer Ausrichtung über einen Achsflansch hinweggeschoben werden kann.

Insbesondere aber kann die Innenausnehmung der Felge und/oder der Achsflansch an seinem Außendurchmesser kreisrund bzw. kreisförmig konturiert sein. Hierdurch kann die Felge in beliebiger Drehstellung über einen Achsflansch hinweggeschoben werden, um das Packerrad an die gewünschte Position auf das Tragrohr aufzufädeln, ohne dass hierfür ein größeres Übermaß der Felgeninnenausnehmung bzw. ein größerer Spalt zwischen Achsflansch und Felge notwendig wäre. Gleichzeitig bildet die Felge mit einer kreisrunden Innenausnehmung eine Art Standardfelge, die einfach zu fertigen ist.

In vorteilhafter Weiterbildung der Erfindung kann die Felge mit der an die Innenausnehmung angrenzenden Felgenwandung etwa mittig und/oder bündig über dem Achsflansch des Tragrohrs sitzen. Die zumindest eine Montageplatte kann beispielsweise auf ihrer dem Achsflansch und der Felgenwandung zugewandten Seite eben konturiert sein und/oder Anlageflächen für den Achsflansch und die Felge besitzen, die in einer gemeinsamen Ebene liegen. Wird die Montageplatte an den Achsflansch und die zugehörige Felge montiert, liegen der Achsflansch und die angrenzende Felgenwandung etwa mittig übereinander bzw. axialseitig bündig zueinander. Dies ermöglicht nicht nur eine einfache Ausbildung der Montageplatten, sondern besitzt auch noch den großen Vorteil, dass ein Packerrad nicht "falsch herum" aufgefädelt werden kann und die Tragrohre von beispielsweise linken und rechten Maschinenflügeln symmetrisch ausgebildet sein können. Auch bei Verwendung von Gleichteilen ist keine falsche Montage möglich, die zu ungleichmäßigen Spalten bzw. Beabstandungen zwischen den Packerrädern in der Packerwalze führen würden, so wie dies bei falsch montierten Packerrädern mit Sternfelgen nach dem Stand der Technik auftreten kann.

Insbesondere können als Montageplatten einfache, in der Wandstärke gleichbleibende Platten Verwendung finden, die beidseitig eben ausgebildet sind. Gleichwohl wäre es natürlich auch möglich, reliefartig durchkonturierte Montageplatten zu verwenden, die beispielsweise dem Bereich von Schraubbolzenausnehmungen stumpfartige Erhöhungen und/oder auf der dem Achsflansch und der Felge zugewandten Seite erhöhte Aufstandsflächen besitzen können, die präzise bearbeitbare Bearbeitungsflächen besitzen.

Vorteilhafterweise sind die Montageplatten geteilt ausgebildet bzw. sind auf zumindest einer Achsialseite einer Felge und eines zugehörigen Achsflansches zumindest zwei Montageplatten vorgesehen, die in unterschiedlichen Sektoren angeordnet werden. Durch mehrere auf derselben Seite angeordnete Montageplatten kann einerseits eine stabile Befestigung mit in Umfangsrichtung verteilt eingeleiteten Haltekräften erzielt werden, andererseits wird eine einfache Montage möglich, die kein Auffädeln der Montageplatten oder ähnliches erfordern würde. Insbesondere können die Montageplatten bzw. Montageplattenteile in Umfangsrichtung betrachtet auf einen Sektor beschränkt sein, der kleiner als 180° ist.

Vorteilhafterweise können auf zumindest einer Achsialseite von Felge und Achsflansch zwei Montageplatten vorgesehen sein, die bezüglich der Tragrohrachse einander gegenüberliegend angeordnet sind und sich jeweils über einen Sektor von 90° bis 180° oder 120° bis 150° erstrecken.

In Weiterbildung der Erfindung kann eine Felge am zugehörigen Achsflansch durch Montageplatten auf beiden Achsialseiten der Felge montiert sein, das heißt es werden Montageplatten von rechts und links bzw. in Achsrichtung des Tragrohrs von vorne und hinten anmontiert, sodass die Felge sozusagen sandwichartig zwischen zumindest zwei Montageplatten befestigt wird, insbesondere eingeklemmt wird.

Werden von beiden Achsialseiten her Montageplatten vorgesehen, kann die Felge und/oder der Achsflansch zwischen den Montageplatten lediglich eingeklemmt werden. Da Packerradwalzen üblicherweise keine Antriebskräfte oder Bremskräfte übertragen müssen, treten in Umfangsrichtung zwischen Felge und Achsflansch keine nennenswerten Kräfte auf, sodass ein Festklemmen vollständig sein kann.

Alternativ oder zusätzlich zu einem Einklemmen der Felge und/oder Achsflansches zwischen beidseitig angeordneten Montageplatten, können die Montageplatten aber auch formschlüssig an der Felge und/oder dem Achsflansch positioniert und fixiert werden, beispielsweise mittels einer zentrierenden Radmutter oder Passungsstiften, um die Montageplatten radial und/oder in Umfangsrichtung an der Felge und/oder dem Achsflansch zu fixieren.

Alternativ oder zusätzlich können die Montageplatten auch durch passgenaue Ausbildung ihres Innenumfangs und/oder ihres Außenumfangs am Tragrohr und/oder am Felgenbett bzw. einer Umfangskontur der Felge formschlüssig zentriert werden.

Die Felgen müssen aber nicht zwangsweise mittels beidseitig vorgesehener bzw. sandwichartig angeordneter Montageplatten befestigt werden. Es kann in alternativer Weiterbildung der Erfindung auch ausreichend sein, auf nur einer Achsialseite der Felge eine oder mehrere Montageplatten vorzusehen. In diesem Fall können die Montageplatten sowohl am Achsflansch als auch an der Felge verschraubt sein oder in anderer Weise fixiert werden, insbesondere durch geeignete Spannelemente.

Bei beidseitiger Plattenanordnung kann es ausreichend sein, die sandwichartig angeordneten Platten nur an der Felge oder nur am Achsflansch zu verschrauben oder in anderer Weise zu fixieren, sodass die Montageplatten an der jeweils anderen Komponente nur festgeklemmt sind, wobei in diesem Fall die genannte jeweils andere Komponente von der Wandstärke her vorzugsweise etwas dicker ausgebildet sein kann. Werden beispielsweise die sandwichartig angeordneten Montageplatten an der Felge festgeschraubt, kann der Achsflansch im Vergleich zur Felgenwandung eine etwas größere Material- bzw. Wandungsstärke aufweisen, um sicherzustellen, dass beim Festspannen der Montageplatten auf den gegenüberliegenden Achsialseiten der Felgenwandung der zwischen den Montageplatten liegende Achsflansch tatsächlich ausreichend festgeklemmt wird.

Alternativ ist es aber auch bei beidseitiger Plattenmontage möglich, die Montageplatten sowohl an der Felge als auch am Achsflansch festzuschrauben bzw. durch andere Spannmittel zu fixieren und/oder in der vorgenannten Weise formschlüssig zu zentrieren bzw. zu positionieren.

Die vorliegende Erfindung wird nachfolgend anhand eines bevorzugten Ausführungsbeispiels und zugehörigen Zeichnungen näher erläutert. In den Zeichnungen zeigen:
- Fig. 1:: eine perspektivische, ausschnittsweise Darstellung einer Bodenbearbeitungsmaschine mit einer Bodenwalze nach einer vorteilhaften Ausführung der Erfindung, die mehrere auf einem Tragrohr beabstandet zueinander angeordnete Packerräder aufweist,
- Fig. 2:: eine perspektivische Darstellung des Tragrohrs der Bodenwalze aus Fig. 1, wobei mehrere Achsflansche und ein auf einem Achsflansch montiertes Packerrad gezeigt sind, und
- Fig. 3:: eine Schnittansicht der auf einem Achsflansch montierten Packerräder, wobei die Felge gemäß einem Ausführungsbeispiel mittels Montageplatten am Achsflansch festgeschraubt ist.

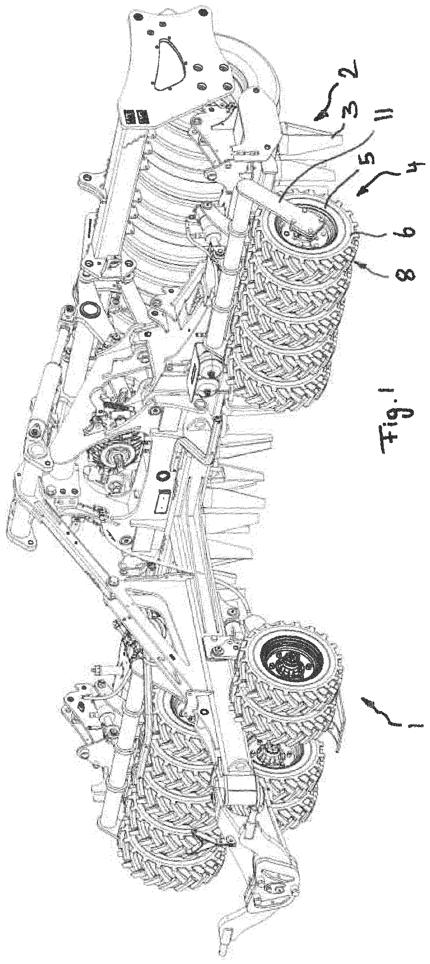

Wie Fig. 1 zeigt, kann die Bodenbearbeitungsmaschine 1 ein oder mehrere Bodenbearbeitungsaggregate 2 umfassen, die eine oder mehrere, quer zur Fahrtrichtung ausgerichtete Reihen von Bodenwerkzeugen 3 umfassen können. Die Bodenbearbeitungswerkzeuge 3 können in mehrere Sektionen unterteilt angeordnet sein, beispielsweise an rechten und linken Seitenflügeln und einem Mittelteil der Bodenbearbeitungsmaschine 1. Unabhängig hiervon können die Bodenbearbeitungswerkzeuge 3 an einem Maschinenrahmen in geeigneter Weise aufgehängt sein.

Wie Fig. 1 zeigt, umfasst die Bodenbearbeitungsmaschine 1 ferner eine Bodenwalze 4, die den Bodenbearbeitungswerkzeugen 3 vorauslaufen, ggf. aber auch nachlaufen kann.

Die Bodenwalze 4 umfasst mehrere jeweils auf Felgen 5 angeordnete Reifen 6, die auf einem Tragrohr 7 beabstandet zueinander angeordnet sind. Die Bodenwalze 4 kann dabei ähnlich wie das Bodenbearbeitungsaggregat 2 in mehrere Sektionen unterteilt sein und dementsprechend mehrere Tragrohre 7 umfassen, die in der Arbeitsposition zumindest näherungsweise koaxial zueinander angeordnet sein können. Insbesondere kann die Bodenwalze 4 in rechte und linke Seitenflügel unterteilt sein und ggf. einen zentralen Mittelteil aufweisen, wobei die genannten Seitenflügel um liegende, in Fahrtrichtung weisende Schwenkachsen wippbar sein können, um die genannten Seitenteile der Bodenwalze 4 in eine aufrechte Vorgewende- und/oder Transportstellung verschwenken zu können, was jedoch nicht zwingend erforderlich ist.

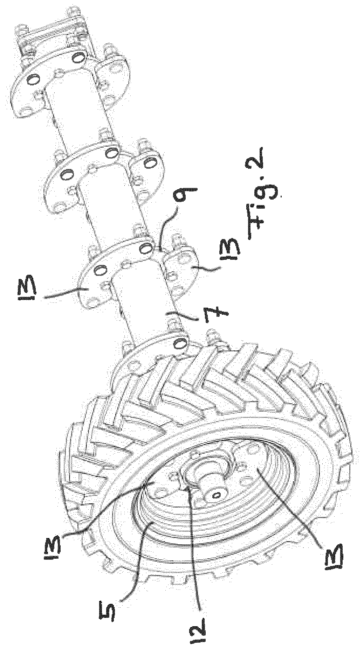

Wie die Figuren 2 bis 3 zeigen, sind dabei auf einem Tragrohr 7 mehrere Packerräder 8 aufgefädelt und mit ihren Felgen 5 jeweils an einem Achsflansch 9 des Tragrohrs 7 befestigt.

Das genannte Tragrohr 7 kann an gegenüberliegenden Enden drehbar gelagert sein, beispielsweise mittels Achslagern 10, die über Schwingen 11 an einem Rahmenteil des Maschinenrahmens aufgehängt sein können.

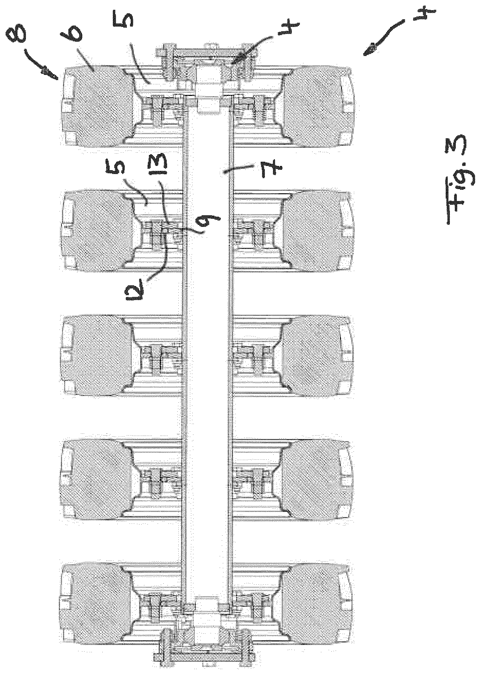

Die Felgen 5 können kreisrunde Innenausnehmungen 12 besitzen, vgl. Fig. 2 und 3, die vom Durchmesser her an die vorzugsweise ebenfalls kreisrunden Achsflansche 9 des Tragrohrs 7 derart angepasst sind, dass die Felgen 5 über die Achsflansche 9 des Tragrohrs 7 hinwegschiebbar sind. Die Innenausnehmungen 12 der Felgen 5 können im Wesentlichen dem Außendurchmesser der Achsflansche 9 entsprechen und dabei ein gewisses Übermaß aufweisen, um ohne die Gefahr zu verklemmen über die Achsflansche 9 hinweggeschoben werden zu können. Beispielsweise können die Innenausnehmungen 12 der Felgen 5 und die Achsflansche 9 im Sinne eine Spielpassung aneinander angepasst sein, so dass die Schnittstelle zwischen Felgen 5 und Achsflanschen 9 einen geringfügigen Ringspalt aufweisen kann, der jedoch vorzugsweise sehr klein sein kann oder auch gegen null gehen kann.

Die besagten Achsflansche 9 können starr am Tragrohr 7 befestigt sein, beispielsweise daran festgeschweißt sein können oder auch festgespannt oder in anderer Weise befestigt sein können. Unabhängig von der Befestigung der Achsflansche 9 können diese vom Tragrohr 9 radial nach außen vorspringen und/oder ebene Ringplatten bilden.

Die Felgen 5 können vorteilhafterweise um die Innenausnehmungen 12 herum ebenfalls ebene Felgenwandungen aufweisen, die sich radial erstrecken.

Vorteilhafterweise können die Felgen 5 im montierten Zustand mittig zentriert auf dem jeweiligen Achsflansch 9 sitzen und/oder zusammen mit dem zugehörigen Achsflansch in einer gemeinsamen Ebene angeordnet sein und/oder mit zumindest einer axialen Stirnseite bündig zum zugehörigen Achsflansch 9 angeordnet sein.

Wie Fig. 2 und 3 zeigen, sind die Felgen 5 und der zugehörige Achsflansch 9 auch im montierten Zustand des Packerrads 8 zueinander überdeckungsfrei, wenn man das montierte Packerrad 8 mit einer Blickrichtung parallel zur Längsachse des Tragrohrs 7 betrachtet. Die Felge 5 wird nicht axial gegen den Achsflansch 9 gespannt.

Zur Befestigung der Felge 5 am Achsflansch 9 werden Montageplatten 13 verwendet, die bei Betrachtung in einer Blickrichtung parallel zur Tragrohrlängsachse sowohl den Achsflansch 9 als auch die Felge 5 überdecken und von zumindest einer Seite her gegen jeweils einen Achsflansch 9 und die zugehörige Felge 5 gespannt sind.

Vorteilhafterweise sind zumindest auf einer Axialseite der Felge 5 zwei Montageplatten 13 vorgesehen, die ringsegmentartig ausgebildet sein können und sich vorteilhafterweise über einen Sektor von weniger als 180° erstrecken. Beispielsweise können zwei Montageplatten 13 auf derselben Felgenseite 5 vorgesehen sein, die bezüglich des Tragrohrs 7 auf gegenüberliegenden Seiten angeordnet sind und sich jeweils über einen Sektor von beispielsweise 90° bis 180° oder 110° bis 160° oder 120° bis 150° erstrecken können, um einerseits leicht montiert werden zu können und andererseits die Haltekräfte ausreichend zu verteilen.

Wie Fig. 2 und Fig. 3 zeigen, kann jede Montageplatte 13 einerseits an der Felge 5 festgeschraubt und andererseits am Achsflansch 9 festgeschraubt sein, wobei dies mittels zwei, drei oder mehr Schraubbolzen erfolgen kann.

Die Montageplatten 13 können gleichzeitig Zentrierelemente bilden, die das jeweilige Packerrad bzw. dessen Felge 5 bezüglich des Tragrohrs 7 zentrieren. Dies kann beispielsweise über die Innen- und Außenumfangskonturen der Montageplatten 13 erfolgen, die in geeigneter Weise an den Außenumfang des Tragrohrs 7 und den Innenumfang des Felgenbetts der Felge 5 oder eine andere Kontur der Felge 5 angepasst sein können, sodass die Montageplatten 13 passgenau zwischen Tragrohr 7 und Felgenbett bzw. einer Innenumfangskontur der Felge 5 sitzen und die Felge 5 formschlüssig zentrieren.

Alternativ oder zusätzlich kann eine Zentrierung der Felgen 5 über die Montageplatten 13 auch mittels Zentrierbolzen erfolgen, die die Felge 5 an den Montageplatten 13 und/oder die Montageplatten 13 am Achsflansch 9 bezüglich der Tragrohrlängsachse zentrieren bzw. exakt so ausrichten, dass die Felge 5 und damit das Packerrad 8 mit seiner Drehachse bezüglich der Tragrohrlängsachse zentriert ist.

Alternativ oder zusätzlich können Montageplatten 13 beidseitig an der Felge 5 und dem Achsflansch 9 montiert werden, sodass die Felge 5 und der Achsflansch 9 sandwichartig zwischen Montageplatten 9 eingespannt bzw. festgeklemmt werden. Insbesondere können solche beidseits montierten Montageplatten 13 mit durchgängigen Schraubbolzen an der Felge 5 und/oder am Achsflansch 9 festgespannt werden. Besitzen der Achsflansch 9 und die Felge 5 dieselbe Wandstärke, kann die Felge 5 zentriert und bündig am Achsflansch 9 exakt festgeklemmt werden.

Alternativ kann es aber auch ausreichend sein, die Felge 5 nur einseitig mit Montageplatten 13 am Achsflansch 9 zu befestigen, insbesondere mittels Schraubbolzen, die die Montageplatten 13 einerseits am Achsflansch 9 festspannen und andererseits am Steg der Felge 5 festspannen.

## Patentansprüche

1. Bodenwalze mit einem Tragrohr (7), auf dem mehrere auf Felgen (5) angeordnete Reifen (6) beabstandet zueinander angeordnet sind, wobei an dem Tragrohr (7) Achsflansche (9) vorgesehen sind, an denen die Felgen (5) befestigt sind, **dadurch gekennzeichnet, dass** die Achsflansche (9) und die Felgen (5) auch im montierten Zustand der Felgen (5) überdeckungsfrei voneinander sind, wobei die Felgen (5) mittels ringsegmentartigen Montageplatten (13) an dem Achsflanschen (9) befestigt sind, wobei die Montageplatten (13) bei Betrachtung in einer Blickrichtung parallel zur Tragrohrlängsachse sowohl die Achsflansche (9) als auch die Felgen (5) überdecken und von zumindest einer Seite her gegen jeweils einen Achsflansch (9) und die zugehörige Felge (5) gespannt sind.

2. Bodenwalze nach dem vorhergehenden Anspruch, wobei die Felge (5) eine Innenausnehmung (12) besitzt, deren Form- und Bemaßung derart an die Achsflansche (9) des Tragrohrs (7) angepasst ist, dass die Felge (5) in beliebiger Drehstellung über die Achsflansche (9) hinwegschiebbar ist.

3. Bodenwalze nach einem der vorhergehenden Ansprüche, wobei die Felge (5) eine kreisförmig konturierte Innenausnehmung (12) besitzt und/oder die Achsflansche (9) einen kreisförmig konturierten Außenumfang besitzen.

4. Bodenwalze nach einem der vorhergehenden Ansprüche, wobei die Felgen (5) im montierten Zustand auf dem Außenumfang der Achsflansche (9) mit einem Ringspalt sitzen, der eine Spielpassung zwischen Felge (15) und Achsflansch (9) bildet oder gegen Null geht.

5. Bodenwalze nach einem der vorhergehenden Ansprüche, wobei sich die Felge (5) mit ihrem an dem zugehörigen Achsflansch (9) angrenzenden Ringabschnitt mittig zentriert zum Achsflansch (9) erstreckt und/oder mit zumindest einer Achsialseite bündig an eine Achsialseite des Achsflansches (9) anschließt.

6. Bodenwalze nach einem der vorhergehenden Ansprüche, wobei die Felgen (5) bezüglich einer Ebene senkrecht zur Raddrehachse spiegelsymmetrisch ausgebildet sind und in zwei zueinander umgedrehten Montagestellungen, in denen die Felge (15) um eine Achse senkrecht zur Raddrehachse um 180° verdreht ist, gleichermaßen mittig zum Achsflansch (9) ausgerichtet ist.

7. Bodenwalze nach einem der vorhergehenden Ansprüche, wobei auf zumindest einer Achsialseite der Felge (5) mehrere Montageplatten (13) vorgesehen sind, die sich jeweils auf einen Sektor von weniger als 180° beschränken.

8. Bodenwalze nach dem vorhergehenden Anspruch, wobei auf zumindest einer Achsialseite der Felge (5) zwei Montageplatten (13) vorgesehen sind, die auf gegenüberliegenden Seiten des Tragrohrs (7) angeordnet sind und sich jeweils über einen Sektor von 90° bis 180° oder 120° bis 150° erstrecken.

9. Bodenwalze nach einem der vorhergehenden Ansprüche, wobei auf gegenüberliegenden Achsialseiten der Felge (5) jeweils Montageplatten (13) vorgesehen sind, die die Felge (5) sandwichartig am zugehörigen Achsflansch (9) festspannen.

10. Bodenwalze nach einem der Ansprüche 1 bis 8, wobei nur auf einer Achsialseite der Felge (5) Montageplatten (13) vorgesehen sind, die sowohl an der Felge (5) als auch am zugehörigen Achsflansch (9) festgeschraubt oder festgespannt sind.

11. Bodenbearbeitungsmaschine (1), beispielsweise Sämaschine und/oder landwirtschaftliches Anbaugerät zum Anbau an einen Schlepper, mit einer Bodenwalze (4), die nach einem der vorhergehenden Ansprüche ausgebildet ist.

## Claims

1. Soil roller comprising a support tube (7) on which multiple tires (6) arranged on rims (5) are arranged at a distance to one another, wherein axle flanges (8) on which the rims (5) are fastened, are provided on the support tube (7), **characterized in that** also in the mounted state of the rims (5), the axle flanges (9) and the rims (5) are without mutual overlap, wherein the rims (5) are fastened to the axle flanges (9) by means of ring-segment-type mounting plates (13), wherein the mounting plates (13), when viewed in a direction of view parallel to the support tube longitudinal axis conceal both the axle flanges (9) and the rims (5) and are clamped against in each case one axle flange (89) and the associated rim (5) from at least one side.

2. Soil roller according to the preceding claim, wherein the rim (5) has an inner recess (12) the shape and dimensions of which are adapted to the axle flanges (9) of the support tube (7) in such a way, that the rim (5) can be pushed beyond the axle flanges (9) in any rotational position.

3. Soil roller according to one of the preceding claims, wherein the rim (5) has an inner recess (12) of circular contour and/or the axle flanges (9) have an outer circumference of circular contour.

4. Soil roller according to one of the preceding claims, wherein in the mounted state, the rims (5) are seated on the outer circumference of the axle flanges (9) with an annular gap, which forms a clearance fit between rim (15) and axle flange (9) or amounts to almost zero.

5. Soil roller according to one of the preceding claims, wherein the rim (5) extends centrally-centered towards the axle flange (9) with its annular portion adjacent to the associated axle flange (9) and/or terminates flush with at least one axial side on an axial side of the axle flange (9).

6. Soil roller according to one of the preceding claims, wherein the rims (5) are configured mirror-symmetrical to the wheel rotational axis with respect to a plane and in two mutually-inverted mounting positions, in which the rim (15) is rotated around an axis perpendicular to the wheel rotational axis, are oriented equally centrally to the axle flange (9).

7. Soil roller according to one of the preceding claims, wherein multiple mounting plates (13) are provided on at least one axial side of the rim (5) and in each case limited to a sector of less than 180°.

8. Soil roller according to the preceding claims, wherein two mounting plates (13) are in each case provided on at least one axial side of the rim (5) and arranged on opposite sides of the support tube (7) and in each case span a sector of 90° to 180° or 120° to 150°.

9. Soil roller according to one of the preceding claims, wherein mounting plates (13) are in each case provided on opposite axial sides of the rim (5), said plates sandwich-clamping the rim (5) on the associated axle flange (9).

10. Soil roller according to one of claims 1 to 8, wherein mounting plates (13) are provided only on one side of the rim (5) and are fixedly-screwed or fixedly-clamped both on the rim (5) and on the associated axle flange (9).

11. Soil working machine (1), for example sowing machine and/or agricultural attachment implement for attachment to a tractor, comprising a soil roller (4) configured according to one of the preceding Claims.

## Revendications

1. Rouleau de sol avec un tube porteur (7) sur lequel plusieurs pneus (6) agencés sur des jantes (5) sont agencés à distance les uns des autres, des brides d'essieu (9) étant prévues sur le tube porteur (7), sur lesquelles les jantes (5) sont fixées, **caractérisé en ce que** les brides d'essieu (9) et les jantes (5) sont également sans recouvrement les unes par rapport aux autres à l'état monté des jantes (5), les jantes (5) étant fixées sur les brides d'essieu (9) au moyen de plaques de montage (13) en forme de segments annulaires, les plaques de montage (13) recouvrant aussi bien les brides d'essieu (9) que les jantes (5) lorsqu'on les observe dans une direction d'observation parallèle à l'axe longitudinal du tube porteur et étant serrées d'au moins un côté contre une bride d'essieu (9) et la jante (5) correspondante.

2. Rouleau de sol selon la revendication précédente, dans lequel la jante (5) possède un évidement intérieur (12) dont la forme et les dimensions sont adaptées aux brides d'essieu (9) du tube porteur (7) de telle sorte que la jante (5) peut être déplacée au-dessus des brides d'essieu (9) dans une position de rotation quelconque.

3. Rouleau de sol selon l'une quelconque des revendications précédentes, dans lequel la jante (5) possède un évidement intérieur (12) à contour circulaire et/ou les brides d'essieu (9) possèdent une périphérie extérieure à contour circulaire.

4. Rouleau de sol selon l'une quelconque des revendications précédentes, dans lequel les jantes (5) reposent à l'état monté sur la périphérie extérieure des brides d'essieu (9) avec un jeu annulaire qui forme un ajustement avec jeu entre la jante (15) et la bride d'essieu (9) ou qui tend vers zéro.

5. Rouleau de sol selon l'une quelconque des revendications précédentes, dans lequel la jante (5) s'étend avec sa section annulaire adjacente à la bride d'essieu (9) correspondante de manière centrée par rapport à la bride d'essieu (9) et/ou se raccorde avec au moins un côté axial à fleur d'un côté axial de la bride d'essieu (9).

6. Rouleau de sol selon l'une quelconque des revendications précédentes, dans lequel les jantes (5) sont réalisées sous forme symétrique par rapport à un plan perpendiculaire à l'axe de rotation de roue et sont orientées de la même manière au centre de la bride d'essieu (9) dans deux positions de montage inversées l'une par rapport à l'autre, dans lesquelles la jante (15) est tournée de 180° autour d'un axe perpendiculaire à l'axe de rotation de roue.

7. Rouleau de sol selon l'une quelconque des revendications précédentes, dans lequel il est prévu, sur au moins un côté axial de la jante (5), plusieurs plaques de montage (13) qui se limitent chacune à un secteur de moins de 180°.

8. Rouleau de sol selon la revendication précédente, dans lequel il est prévu, sur au moins un côté axial de la jante (5), deux plaques de montage (13) qui sont agencées sur des côtés opposés du tube porteur (7) et qui s'étendent chacune sur un secteur de 90° à 180° ou de 120° à 150°.

9. Rouleau de sol selon l'une quelconque des revendications précédentes, dans lequel des plaques de montage (13) sont prévues sur des côtés axiaux opposés de la jante (5), qui serrent la jante (5) en sandwich sur la bride d'essieu (9) correspondante.

10. Rouleau de sol selon l'une quelconque des revendications 1 à 8, dans lequel des plaques de montage (13) sont prévues uniquement sur un côté axial de la jante (5), lesquelles sont vissées ou serrées à la fois sur la jante (5) et sur la bride d'essieu (9) correspondante.

11. Machine de travail du sol (1), par exemple semoir et/ou accessoire agricole destiné à être monté sur un tracteur, avec un rouleau de sol (4) conçu selon l'une quelconque des revendications précédentes.
